Europäisches Patentamt

(19) **European Patent Office**

**Office européen des brevets**

(11) Numéro de publication: **0 050 542**
**B1**

(12) **FASCICULE DE BREVET EUROPEEN**

(45) Date de publication du fascicule du brevet: **27.02.85**

(51) Int. Cl.⁴: **B 64 C 9/22**

(21) Numéro de dépôt: **81401517.8**

(22) Date de dépôt: **01.10.81**

(54) **Aile d'aéronef pourvue d'un système hypersustentateur dans son bord d'attaque et aéronef comportant une telle aile.**

(30) Priorité: **16.10.80 FR 8022154**

(43) Date de publication de la demande:
**28.04.82 Bulletin 82/17**

(45) Mention de la délivrance du brevet:
**27.02.85 Bulletin 85/09**

(84) Etats contractants désignés:
**DE GB IT NL**

(56) Documents cités:
**DE-A-2 149 030**
**US-A-3 486 720**
**US-A-3 968 946**

(73) Titulaire: **Société Nationale Industrielle Aérospatiale Société anonyme dite:**
**37 Bld de Montmorency**
**F-75016 Paris (FR)**

(72) Inventeur: **Pauly, Bernard**
**13 rue des Fleurs**
**F-31700 Blagnac (FR)**
Inventeur: **Ciprian, Danilo**
**Chemin de Peyrelong**
**Cedex 423 Aussonne F-31700 Blagnac (FR)**

(74) Mandataire: **Bonnetat, Christian**
**Cabinet PROPI Conseils 23 rue de Léningrad**
**F-75008 Paris (FR)**

Courier Press, Leamington Spa, England.

## Description

La présente invention concerne une aile d'aéronef pourvue d'un système hypersustentateur dans son bord d'attaque et un aéronef comportant une telle aile.

On sait que pour accroître leur portance au moment du décollage, de l'atterrissage ou de l'attente en vol, certains avions, notamment gros porteurs, sont pourvus dans les bords d'attaque de leurs ailes, de systèmes hypersustentateurs.

Ces systèmes sont disposés généralement sur toute le longueur du bord d'attaque, jusqu'au voisinage de l'encastrement de l'aile sur le fuselage. Ils sont logés dans des évidements des ailes et forment une partie du bord d'attaque et de la partie voisine de l'extrados de celles-ci, en position repliée. En position déployée d'hypersustentation, ils font saillie en avant dudit bord d'attaque des ailes, en ménageant une fente de soufflage d'air entre leur intrados et l'extrados des ailes. Ils comprennent des volets ou "becs" et un mécanisme assurant le pasage d'une configuration à l'autre desdits volets (configuration lisse de l'aile, et configuration hypersustentatrice).

Tout en étant proches du fuselage, ces volets hypersustentateurs en sont séparés par des onglets qui constituent le volume de raccordement entre la voilure et le fuselage dans la zone du bord d'attaque. La fonction principale de tels onglets est d'améliorer l'écoulement fluide sur toute la zone d'encastrement de la voilure dans le fuselage, lorsque cette voilure est en configuration lisse, c'est-à-dire lorsque lesdits volets hypersustentateurs sont repliés.

En revanche, lorsque la voilure présente sa configuration de décollage ou d'atterrissage, c'est-à-dire lorsque lesdits volets hypersustentateurs sont déployée, il apparaît du fait de l'avancement desdits volets, une discontinuité du bord d'attaque entre chaque onglet et le volet voisin, de sorte qu'il en résulte une dégradation des performances aérodynamiques.

La présente invention a pour objet de remédier à cet inconvénient et d'améliorer l'efficacité des volets hypersustentateurs de bord d'attaque dans la zone de raccordement de la voilure et du fuselage.

Par rapport ou US—A—3968946 qui décrit déjà une aile d'aéronef pourvue, dans son bord d'attaque, d'un système hypersustentateur dont une partie est disposée au voisinage du raccordement de ladite aile au fuselage de l'aéronef, mais séparée dudit fuselage par un onglet, ledit système comprenant au moins un volet hypersustentateur mobile entre une position repliée dans laquelle il est logé dans un évidement de l'aile et forme une partie du bord d'attaque et la partie voisine de l'extrados de celle-ci, et une position déployée d'hypersustentation, dans laquelle ledit volet fait saillie en avant dudit bord d'attaque en ménageant une fente de soufflage d'air entre son intrados et l'extrados de ladite aile, ledit onglet comporte, dans son bord d'attaque, un volet d'onglet mobile entre une position repliée, dans laquelle il est logé dans un évidement de l'onglet, et une position déployée, dans laquelle il assure la continuité du bord d'attaque entre l'onglet et le volet hypersustentateur également en position déployée, l'invention est caractérisée en ce que le logement du volet d'onglet se trouve au moins en partie du côté de l'intrados dudit onglet et est ouvert vers l'avant lorsque ledit volet d'onglet est dans sa position déployée et en ce que, d'autre part, une communication est prévue entre le logement du volet d'onglet et le logement du volet hypersustentateur pour que, lorsque ces deux volets, sont dans leurs positions déployées, l'air pénétrant dans le logement du volet d'onglet disposé du côté de l'intrados ressorte par le logement du volet hypersustentateur disposé du côté de l'extrados, de sorte qu'il en résulte un soufflage accru dudit extrados.

Ainsi, grâce à la présente invention, on peut:

— assurer la continuité du bord d'attaque entre le volet hypersustentateur et le fuselage dans la configuration de décollage, d'atterrissage ou d'attente.
— assurer le soufflage convenable de l'extrados au voisinage du fuselage.

De préférence, afin d'assurer le soufflage de l'extrados de l'aile jusqu'au fuselage, l'ouverture du logement de volet d'onglet dans le bord d'attaque s'étend sensiblement du fuselage au volet hypersustentateur, la communication entre les deux logements se fait à travers la quasi-totalité de la paroi du logement de volet hypersustentateur voisine de l'onglet et cette paroi s'étend sensiblement du bord d'attaque jusqu'au fuselage. Ainsi, l'entrée et la sortie de l'air de soufflage de l'extrados, respectivement constituées par ladite ouverture du logement du volet d'onglet et ladite paroi du logement de volet hypersustentateur, sont en regard quoique inclinées différemment par rapport à l'axe de fuselage et l'écoulement de l'air de soufflage est parallèle audit axe et proche du fuselage.

La commande du volet d'onglet peut être liée à celle du volet hypersustentateur, ou bien au contraire en être indépendante.

Afin de pouvoir suivre au mieux la courbure du volet hypersustentateur, le volet d'onglet comporte des éléments articulés, repliables en position rentrée. Une telle structure du volet d'onglet permet par ailleurs d'augmenter la surface de celui-ci en configuration déployée.

Les figures du dessin annexé feront bien comprendre comment l'invention peut être réalisée.

La figure 1 est une vue de dessus montrant partiellement l'emplanture d'une aile, du côté du bord d'attaque, et la partie adjacente du fuselage, selon une réalisation connue.

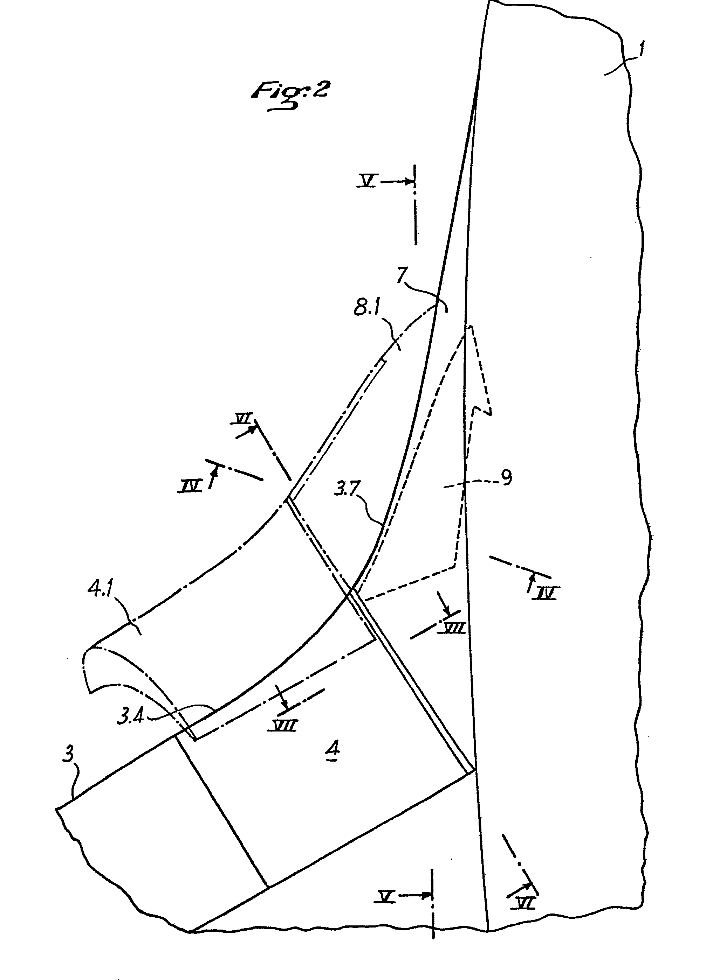

La figure 2 correspond à la figure 1, mais comporte le perfectonnement selon l'invention.

La figure 3 est une vue de l'avant, en perspective, du bord d'attaque de la figure 2.

Les figures 4, 5, 6 et 7 sont des sections respectivement selon les lignes IV—IV, V—V, VI—VI et VII—VII de la figure 2.

Sur ces figures, des références identiques désignent des éléments semblables.

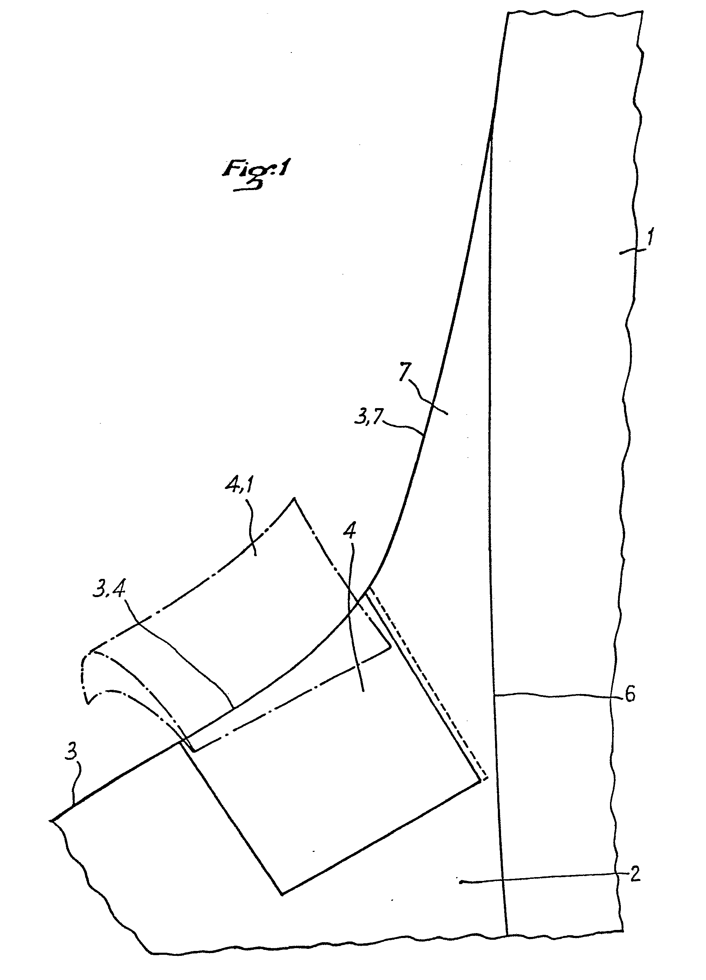

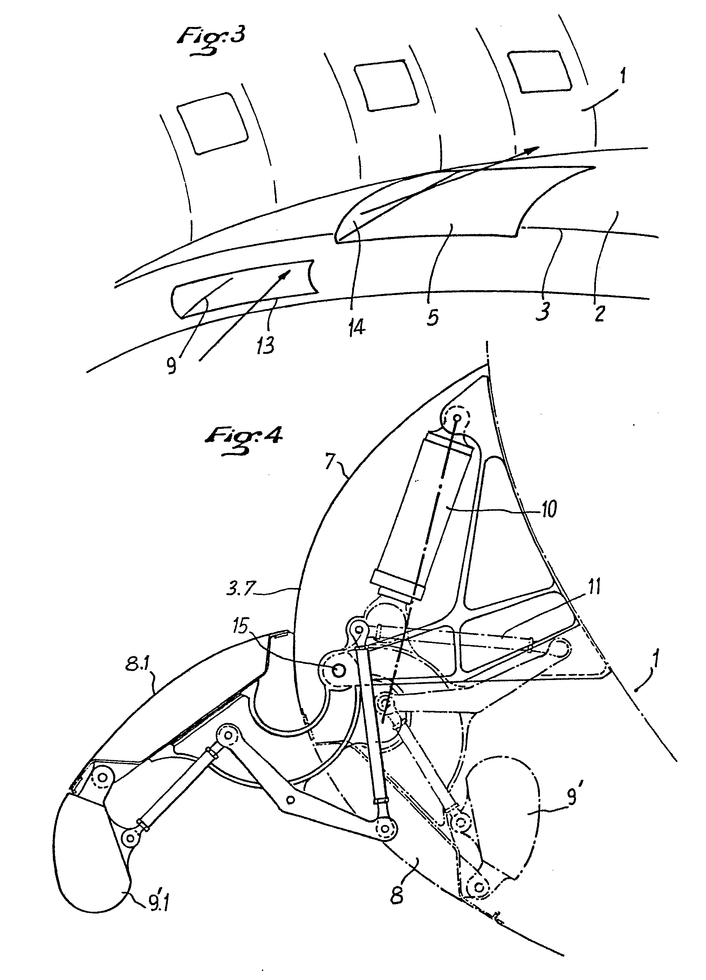

Sur la figure 1, on a représenté, en vue de dessus, une partie de fuselage 1 d'un avion gros porteur, au niveau de l'emplanture d'une aile 2, du côté du bord d'attaque 3. De façon connue, l'aile 2 comporte un volet hypersustentateur 4 disposé dans un logement 5 (voir la figure 3), ménagé dans une partie du bord d'attaque et de l'extrados de l'aile 3. En position repliée, le volet hypersustentateur 4 forme la partie du bord d'attaque et de l'extrados de l'aile 3, correspondant au logement 5. Cette position repliée du volet hypersustentateur 4, dans son logement 5 correspond au vol normal à grande vitesse.

De façon connue, en vol à faible vitesse, par exemple lors de l'atterrissage ou du décollage de l'aéronef, le volet 4 peut prendre une position déployée $4_1$ (voir la position en traits mixtes de la figure 1), dans laquelle le volet 4 fait saillie vers l'avant du bord d'attaque 3 et ménage une fente d'écoulement d'air entre son intrados et l'extrados de l'aile. Un telle fente 16 est visible sur la figure 6.

L'aile 2 est raccordée au fuselage approximativement selon une ligne 6 et, entre le volet 4 et le fuselage 1 est prévu, du côté du bord d'attaque, un volume de raccordement ou onglet 7.

Ainsi, en position repliée du volet 4, le bord d'attaque 3 est constitué, du côté au fuselage, d'une part par une portion 3.7 correspondant à l'onglet 7 et d'une portion 3.4 correspondant au volet 4.

On voit qu'en position dépliée du volet hypersustentateur 4, il existe une discontinuité du bord d'attaque entre le fuselage et ce volet, puisque la portion 3.7 du bord d'attaque de l'onglet est fixe alors que la portion 3.4 du bord d'attaque du volet 4 est venue en saillie vers l'avant.

Pour remédier aux inconvénients de baisse de performances qui en résultent, on prévoit, selon l'invention, un volet d'onglet 8 disposé dans un logement 9 pratiqué dans le bord d'attaque 3.7 et dans l'intrados de l'onglet 7, (voir également la figure 3). Ce volet d'onglet 8 est mobile entre une position repliée dans laquelle il est disposé dans son logement 9 et forme la partie correspondante du bord d'attaque et de l'intrados de l'onglet 7 et une position déployée 8.1 dans laquelle il assure la continuité du bord d'attaque entre le fuselage 1 et le volet 4, également en position déployée 4.1.

Sur la figure 4, on peut voir le volet d'onglet 8 en position déployée $8_1$ et en position rentrée. Ce volet d'onglet 8 comporte un volet principal et un élément articulé repliable 9'. Sous l'action d'un mécanisme 10 et d'une tringlerie 11, le volet 8 peut passer de sa position repliée à sa position déployée $8_1$, alors que simultanément l'élément 9' passe de sa position repliée par rapport au volet 8 à sa position déployée $9_1'$. Grâce à la présence de l'élément 9', il est possible de suivre au mieux la courbure du volet 4, de façon à assurer la meilleure continuité possible entre le fuselage et ce volet 4.

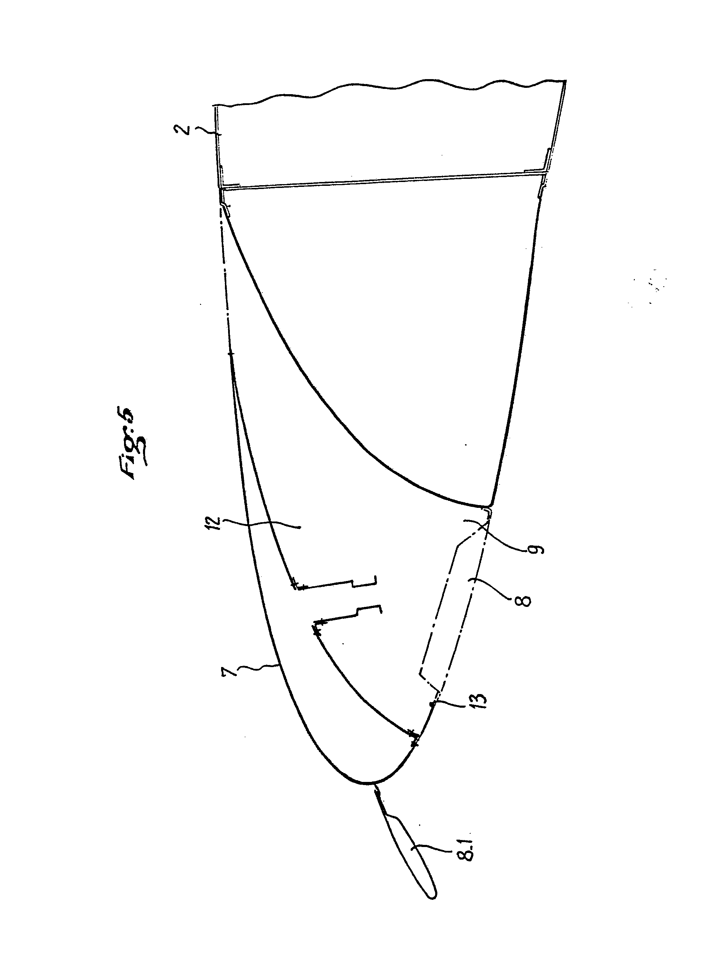

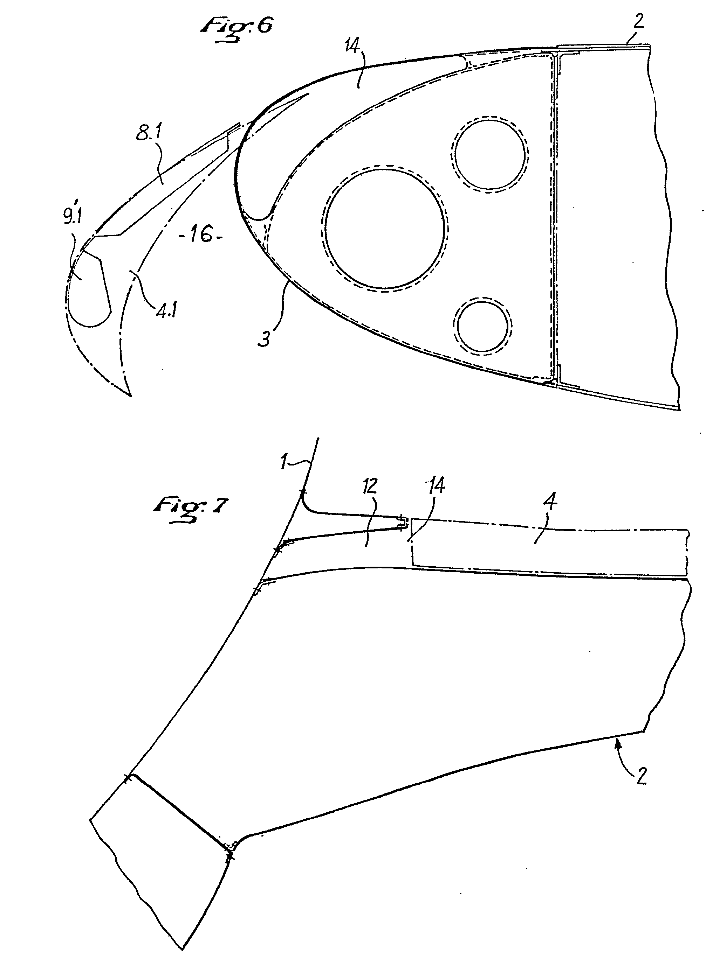

Par ailleurs, comme illustré schématiquement sur la figure 3 où l'on a supposé que le volet d'onglet 8 et le volet hypersustentateur 4 étaient supprimés, afin de laisser apparaitre leurs logements respectifs 9 et 5, il existe une communication entre le logement 9 et le logement 5, pour que l'air pénétrant dans le logement 9, lorsque le volet d'onglet 8 est en position $8_1$ dépliée ressorte, par le logement 5, lorsque le volet hypersustentateur 4 est également en position déployée. Comme le montrent les figures 5 et 7, il existe une veine de communication 12 entre les logements 9 et 5.

La veine 12 commence à l'ouverture 13 du logement 9 dans la partie de bord d'attaque de l'aile 2 et débouche dans le paroi 14 du logement 5, voisine du fuselage 1. Cette ouverture 13 du logement 9 s'étend sensiblement du fuselage 1 au volet hypersustentateur 4, tandis que la paroi 14 du logement 5 s'étend sensiblement du bord d'attaque jusqu'au fuselage.

Ainsi, il est possible d'assurer le soufflage de l'extrados de l'aile 2, jusqu'au fuselage 1.

On voit ainsi que, grâce à l'invention, il est possible d'assurer, à faible vitesse de l'avion, la continuité du bord d'attaque entre le fuselage et le volet 4 et de plus le soufflage de l'extrados.

La commande 10/11 du volet d'onglet 8 peut être liée à celle (non-représentée parce que connue) du volet hypersustentateur 4, ou bien être indépendante de celle-ci.

Comme on peut le voir sur la figure 4, le volet 8 est articulé autour d'un axe 15 situé dans le volume de l'onglet 7 et qui permet une manoeuvre de bas en haut pour sortir le volet 8 en position $8_1$ et inversement pour rentrer le volet dans son logement 9.

**Revendications**

1. Aile d'aéronef pourvue, dans son bord d'attaque (3), d'un système hypersustentateur dont une partie est disposée au voisinage du raccordement de ladite aile (2) au fuselage (1) de l'aéronef, mais séparée dudit fuselage (1) par un onglet (7), ledit système comprenant au moins un volet hypersustentateur (4) mobile entre une position repliée dans laquelle il est logé dans un évidement (5) de l'aile et forme une partie du bord d'attaque et la partie voisine de l'extrados de celle-ci, et une position déployée d'hypersustentation (4.1) dans laquelle ledit volet (4) fait saillie en avant dudit bord d'attaque (3) en ménageant une fente de soufflage d'air (16) entre son intrados et l'extrados de ladite aile, ledit onglet (7) comportant dans son bord d'attaque un volet d'onglet (8) mobile entre une position repliée, dans laquelle il est logé dans un évidement (9) de l'onglet (7), et une position déployée (8.1) dans laquelle il assure la continuité du bord d'attaque entre l'onglet (7) et le volet hypersustentateur (4), également en position déployée (4.1), caractérisé en ce que le logement (9) du volet d'onglet (8) se trouve au moins en partie du côté de l'intrados dudit onglet (7) et est ouvert vers l'avant lorsque ledit volet d'onglet (9) est dans sa position déployée (8.1) et en ce qu'une communication (12) est prévue entre le logement (9) du volet d'onglet (8) et le logement (5) du volet hypersustentateur (4) pour que, lorsque ces deux volets sont dans leur position déployée, l'air pénétrant dans le logement (9) du volet d'onglet (8) disposé du côté de l'intrados ressorte par le logement (5) du volet hypersustentateur (4) disposé du côté de l'extrados, de sorte qu'il en résulte en soufflage accru dudit extrados.

2. Aile d'éronef selon la revendication 1, caractérisé en ce que le déploiement du volet d'onglet (8) se fait de l'intrados vers l'extrados, alors que le repliement de ce volet se fait de l'extrados vers l'intrados.

3. Aile d'aéronef selon l'une des revendications 1 ou 2, caractérisée en ce que l'ouverture (13) du logement (9) de volet d'onglet (8) dans le bord d'attaque (3) s'étend sensiblement du fuselage (1) au volet hypersustentateur (4), en ce que la communication (12) entre les deux logements (5 et 9) se fait à travers la quasi-totalité de la paroi (14) du logement (5) du volet hypersustentateur (4) voisine de l'onglet (7) et en ce que cette paroi (14) s'étend sensiblement du bord d'attaque (3) jusqu'au fuselage (1).

4. Aile d'aéronef selon l'une quelconque des revendications 1 à 3, caractérisée en ce que la commande du volet d'onglet (8) est liée à celle du volet hypersustentateur (4).

5. Aile d'aéronef selon l'une quelconque des revendications 1 à 3, caractérisée en ce que la commande du volet d'onglet (8) est indépendante de celle du volet hypersustentateur (4).

6. Aile d'aéronef selon l'une quelconque des revendications 1 à 5, caractérisé en ce que le volet d'onglet (8) comporte au moins un élément articulé (9') repliable en position repliée.

7. Aile d'aéronef selon l'une quelconque des revendications 1 à 6, caractérisée en ce que la communication (12) entre le logement (9) du volet d'onglet (8) et le logement (5) du volet hypersustentateur (4) est constituée par une veine profilée (12).

**Patentansprüche**

1. Flugzeugflügel, der in seiner Vorderkante (3) mit einem Auftriebsspoilersystem versehen ist, von dem ein Teil in der Nähe der Verbindungsstelle des Flügels (2) zum Rumpf (1) des Flugzeugs angeordnet ist, dabei jedoch von Rumpf (1) durch den keilförmigen Abschnitt (7) getrennt ist, wobei des System zumindest eine Auftriebsspoilerklappe (4), die zwischen einer eingezogenen Stellung, in der sie in einer Ausnehmung (5) des Flügels sitzt und einen Teil der Flügelvorderkante und den benachbarten Teil seiner Flügeloberseite bildet, und einer ausgefahrenen Stellung (4.1) bewegbar ist, in der die Klappe (4) vor die Flügelvorderkante (3) hervortritt und einen Luftströmungsspalt (16) zwischen ihrer Unterseite und der Oberseite des Flügels freiläßt, der keilförmige Abschnitt (7) in der Vorderkante eine Keilklappe (8) aufweist, die zwischen einer eingezogenen Stellung, in der sie in einer Ausnehmung (9) des keilförmigen Abschnitts (7) sitzt, und einer ausgefahrenen Stellung (8.1) beweglich ist, in der sie die Kontinuität der Flügelvorderkante zwischen dem keilförmigen Abschnitt (7) und der Auftriebsspoilerklappe (4) gewährleistet, die ebenfalls in ausgefahrener Stellung (4.1) ist, dadurch gekennzeichnet, daß der Sitz (9) der Keilklappe (8) zumindest zum Teil auf der Seite der Unterkante des keilförmigen Abschnitts (7) liegt und nach vorne offen ist, wenn sich die Klappe (8) in ausgefahrener Stellung (8.1) befindet, und daß eine Verbindung (12) zwischen dem Sitz (9) der Klappe (8) und dem Sitz (5) der Klappe (4) vorgesehen ist, so daß, wenn sich beide Klappen in ausgefahrener Stellung befinden, die Luft, die in den Sitz (9) der auf der Flügelunterseite angeordneten Klappe (8) eindringt, durch den Sitz (5) der Klappe (4), die auf der Flügeloberseite angeordnet ist, austritt, so daß sich eine erhöhte Luftströmung der Flügeloberfläche ergibt.

2. Flugzeugflügel nach Anspruch 1, dadurch gekennzeichnet, daß das Ausfahren der Klappe (8) von der Flügelunterseite zur Flügeloberseite erfolgt, während das Einfahren dieser Klappe sich von der Flügeloberseite zur Flügelunterseite vollzieht.

3. Flugzeugflügel nach einem der Ansprüche 1 oder 2, dadurch gekennzeichnet, daß die Öffnung (13) des Sitzes (9) der Klappe (8) in der Vorderkante (3) sich allgemein vom Rumpf (1) zur Klappe (4) erstreckt, daß die Verbindung (12) zwischen beiden Sitzen (5 und 9) quer über quasi die Gesamtheit der Wand (14) vom Sitz (5) der Klappe (4) neben dem keilförmigen Abschnitt (7) verläuft, und daß die Wand (14) sich allgemein von der Vorderkante (3) bis zum Rumpf (1) erstreckt.

4. Flugzeugflügel nach einem der Ansprüche 1 bis 3, dadurch gekennzeichnet, daß die Steuerung der Klappe (8) gebunden ist an die der Klappe (4).

5. Flugzeugflügel nach einem der Ansprüche 1 bis 3, dadurch gekennzeichnet, daß die Steuerung der Klappe (8) von der Klappe (4) unabhängig ist.

6. Flugzeugflügel nach einem der Ansprüche 1 bis 5, dadurch gekennzeichnet, daß die Klappe (8) mindestens ein Gelenkelement (9') aufweist, das in der eingezogenen Stellung der Klappe (8) zurückstellbar ist.

7. Flugzeugflügel nach einem der Ansprüche 1 bis 6, dadurch gekennzeichnet, daß die Verbindung (12) zwischen dem Sitz (9) der Klappe (8) und dem Sitz (5) der Klappe (4) durch eine Profilader (12) gebildet wird.

## Claims

1. Aircraft wing provided in its leading edge (3), with a high-lift system of which part is disposed in the vicinity of the join of said wing (2) to the fuselage (1) of the aircraft, but separated from said fuselage (1) by a fairing element (7), said system comprising at least one high-lift spoiler (4) movable between a folded position in which it is housed in a recess (5) in the wing and forms part of the leading edge and the part adjacent the upper surface of said wing and an extended high-lift position (4.1) in which said spoiler (4) projects forwardly of said leading edge (3), making an air blowing slot (16) between its lower surface and the upper surface of said wing, said fairing element (7) comprising, in its leading edge, a streamlining flap (8) movable between a folded position in which it is housed in a recess (9) in the fairing element (7), and an extended position (8.1) in which it ensures continuity of the leading edge between the fairing element (7) and the high-lift spoiler (4) likewise in extended position (4.1), characterized in that the housing recess (9) for streamlining flap (8) is at least partly on the lower surface side of said fairing element (7) and opens forwardly when said streamlining flap (8) is in its extended position (8.1) and that a communication (12) is provided between the housing (9) of the streamlining flap (8) and the housing (5) of the high-lift spoiler (4) so that, when these two flap elements are in their extended positions, the air penetrating in the housing (9) of the streamlining flap (8) disposed on the lower surface side emerges through the housing (5) of the high-lift spoiler (4) disposed on the upper surface side, with the result that there is an increased upper surface blowing.

2. Aircraft wing of Claim 1, characterized in that extension of the streamlining flap (8) is directed from lower surface to upper surface and that folding of said flap is directed from upper surface to lower surface.

3. Aircraft wing of Claim 1 or 2, characterized in that the opening (13) of the streamlining flap housing (9) in the leading edge (3) extends substantially from the fuselage (1) to the high-lift spoiler (4), that communication (12) between the two housings (5 and 9) is made through almost the whole of the wall (14) of the housing (5) of the high-lift spoiler (4) adjacent the fairing element (7) and that this wall (14) extends substantially from the leading edge (3) up to the fuselage (1).

4. Aircraft wing of anyone of Claims 1 to 3, characterized in that the control of the streamlining flap (8) is connected to that of the high-lift spoiler (4).

5. Aircraft wing of anyone of Claims 1 to 5, characterized in that the control of the streamlining flap (8) is independent of that of the high-lift spoiler (4).

6. Aircraft wing of anyone of Claims 1 to 5, characterized in that the streamlining flap (8) comprises at least one hinged element (9') foldable in folded position.

7. Aircraft wing of anyone of Claims 1 to 6, characterized in that communication (12) between the housing (9) of the streamlining flap (8) and the housing (5) of the high-lift spoiler (4) is constituted by a sectioned airflow (12).

Fig:1

0 050 542

*Fig.2*

2

0 050 542

Fig. 3

1

13

9

14

5

3

2

Fig. 4

7

10

3.7

11

15

8.1

1

9'

9.1

8

3

Fig.5

Fig. 6

Fig. 7